# EUROPÄISCHE PATENTSCHRIFT

(11) **EP 2 867 031 B1**
(45) Veröffentlichungstag und Bekanntmachung des Hinweises auf die Patenterteilung: **10.08.2016**
(21) Anmeldenummer: 13732473.7
(22) Anmeldetag: 27.06.2013
(51) Int. Cl.: B42D 15/00, G02B 3/00, G02B 3/06, G02B 5/18, B42D 25/29, B42D 25/328

(54) **SICHERHEITSELEMENT MIT BEUGUNGSSTRUKTUREN AUFWEISENDEN MIKROSTRUKTUREN SOWIE VERFAHREN ZUR HERSTELLUNG UND VERIFIKATION**
SAFETY ELEMENT HAVING MICROSTRUCTURES HAVING DIFFRACTIVE STRUCTURES, AND A METHOD FOR MANUFACTURE AND VERIFICATION
ÉLÉMENT DE SÉCURITÉ DOTÉ DE MICROSTRUCTURES COMPRENANT DES STRUCTURES DE DIFFRACTION ET PROCÉDÉS DE FABRICATION ET DE VÉRIFICATION CORRESPONDANTS

(30) Priorität: 27.06.2012 DE 102012211077
(43) Veröffentlichungstag der Anmeldung: 06.05.2015
(73) Patentinhaber: Bundesdruckerei GmbH, 10969 Berlin (DE)
(72) Erfinder: GUTMANN, Roland, 14612 Falkensee (DE)
(74) Vertreter: Patentanwälte Bressel und Partner mbB
(86) Internationale Anmeldenummer: PCT/EP2013/063472
(87) Internationale Veröffentlichungsnummer: WO 2014/001431

(56) Entgegenhaltungen:
- WO-A1-2006/029745
- DE-C1- 10 157 534
- US-A1- 2008 160 226

## Beschreibung

Die Erfindung betrifft ein Sicherheitselement, welches einen Vorrichtungskörper mit einer transparenten Kunststoffschicht aufweist, an deren einer Schichtoberfläche Mikrostrukturen ausgebildet sind. Solche Mikrostrukturen können beispielsweise als Lentikularlinsensystem ausgebildet sein. Ferner betrifft die Erfindung ein Verfahren zur Herstellung eines solchen Sicherheitselements, ein Laminationsblech und ein Verfahren zur Verifikation.

Aus dem Stand der Technik sind unterschiedliche Sicherheitselemente bekannt, welche Mikrostrukturen aufweisen. Diese Mikrostrukturen stellen selbst oder in Kombination mit anderen Bestandteilen des Vorrichtungskörpers des Sicherheitselements ein Sicherheitsmerkmal dar. Aus dem Stand der Technik sind beispielsweise Sicherheitselemente bekannt, die beispielsweise als kartenförmiger Datenträger mit einem Substrat und mindestens einer transparenten Deckfolie ausgebildet sind, bei denen das Substrat unter Anwendung eines Laserstrahls durch die Deckfolie hindurch eine erkennbare Information in das Substrat gespeichert ist.

Die EP 0 216 974 beschreibt beispielsweise einen solchen kartenförmigen Datenträger, wobei die transparente Deckfolie an der Oberfläche mit einem Relief, beispielsweise in Form von Zylinderlinsen, versehen ist, die eine Informationsaufzeichnung charakteristisch verändern. Da die Krümmungsradien solcher linsenartigen Reliefstrukturen in der Regel im Bereich zwischen 30 und 500 µm liegen, werden solche Strukturen auch als Mikrostrukturen bezeichnet.

Auch die EP 0 219 012 A2 beschreibt einen Datenträger, z.B. einen Ausweis oder eine Kreditkarte, der in seinem Inneren Informationen enthält, die mit Hilfe eines Laserstrahls in Form von irreversiblen Änderungen optischer Eigenschaften eingebracht sind. Auf eine Oberfläche des Datenträgers ist eine Kunststoffschicht mit einem Linsenraster aufgebracht. Zur Informationsaufzeichnung durchdringt ein Laserstrahl das Linsenraster und erzeugt in dem darunter liegenden Bereich insbesondere über eine Schwärzung eine Speicherung der optischen Information. Durch das Linsensraster werden die Bereiche der Informationsaufzeichnung begrenzt. Aufgrund der fokussierenden Wirkung der Linsen des Linsenrasters können unter Unterschiedlichen Winkeln unterschiedliche Informationen in denselben Bereich des Datenträgers gespeichert werden. Diese können anschließend betrachtungswinkelabhängig ausgelesen werden. Aufgrund dieser Eigenschaft wird ein solches Sicherheitsmerkmal bzw. ein Sicherheitselement, welches dieses Sicherheitsmerkmal umfasst, auch als Changeable Laser Image (CLI) bezeichnet. Hierbei wird vorausgesetzt, dass das Linsenraster zueinander parallel orientierte Zylinderlinsen aufweist. Werden andere Linsengeometrien, beispielsweise sphärische Linsen, in einem regelmäßigen Raster verwendet, so kann man Winkelabhängigkeiten nicht nur in einer Ebene, sondern in zueinander senkrechten Ebenen erreichen. In einem solchen Fall wird ein entsprechendes Sicherheitsmerkmal bzw. ein Sicherheitselement mit einem solchen Merkmal als Multiple Laser Image (MLI) bezeichnet.

Als Sicherheitsmerkmal wird jedes Merkmal eines Gegenstands bezeichnet, welches ein Nachahmen, Duplizieren, Verfälschen oder Ähnliches eines Gegenstands zumindest erschwert oder unmöglich macht. Als Sicherheitselement wird jede körperliche Entität bezeichnet, welche mindestens ein Sicherheitsmerkmal aufweist. Üblich ist es, eine Vielzahl unterschiedlicher Sicherheitsmerkmale zu kombinieren und in einer baulichen Einheit auszubilden.

Sicherheitselemente können sowohl Halbzeuge für die Herstellung anderer Sicherheitselemente sein oder selbst fertige nutzbare Gegenstände, beispielsweise Sicherheitsdokumente, sein. Als Sicherheitsdokumente werden insbesondere Reisepässe, Personalausweise, Identitätskarten, Führerscheine, Zugangskarten, aber auch Wertdokumente wie Postwertzeichen, Banknoten, Aktien, Bank- und Kreditkarten, aber auch Siegel für Verpackungen, Verpackungen selbst, gegen Fälschung gesicherte Eintrittskarten und Tickets oder Visa und Ähnliches angesehen.

Die US 2008/0160226 A1 betrifft ein Sicherheitselement zur Absicherung von Wertgegenständen mit einem ersten und einem zweiten Echtheitsmerkmal. Das erste Echtheitsmerkmal umfasst eine erste Anordnung mit einer Vielzahl von fokussierenden Elementen, die in einem ersten Raster vorliegen, und eine zweite Anordnung mit einer Vielzahl von mikroskopischen Strukturen, die in einem zweiten Raster vorliegen. Die erste und zweite Anordnung sind dabei derart angeordnet, dass die mikroskopischen Strukturen der zweiten Anordnung bei Betrachtung durch die fokussierenden Elemente der ersten Anordnung in Vergrößerung zu sehen sind. Das zweite Echtheitsmerkmal ist maschinell und/oder visuell prüfbar und wird durch die erste Anordnung des ersten Echtheitsmerkmals nicht beeinflusst.

In der WO 2006/029745 A1 wird ein Sicherheitsdokument mit einem transparenten Fenster, in dem ein erstes optisches Element angeordnet ist und mit einem zweiten transparenten Fenster, in dem ein zweites optisches Element angeordnet ist, beschrieben. Das erste transparente Fenster und das zweite transparente Fenster sind derart voneinander beabstandet auf einem Träger des Sicherheitsdokuments angeordnet, dass das erste und das zweite optische Element in Überdeckung miteinander gebracht werden können. Das erste optische Element weist ein erstes transmissives Mikrolinsen-Feld und das zweite optische Element ein zweites transmissives Mikrolinsen-Feld auf, wobei sich bei Überdeckung des zweiten mit dem ersten Mikrolinsen-Feld ein erster optischer Effekt zeigt.

Neben der Verwendung von Mikrostrukturen in Form von Linsen ist es auch bekannt, Reliefstrukturen zu verwenden, deren charakteristische Dimensionen im Mikrometerbereich liegen, beispielsweise in Form von Mikroschrift oder Mikrosymbolen.

Eine weitere Gruppe von Sicherheitsmerkmalen ist so ausgebildet, dass diese Licht in charakteristischer Weise beugen. Beispiele hierfür sind insbesondere Hologramme, die in verschiedenen Ausprägungen in Sicherheitsdokumenten und Sicherheitselementen eingesetzt werden. Eine große Gruppe von diesen beugenden Sicherheitsmerkmalen und Sicherheitselementen umfassen Oberflächenreliefstrukturen, welche ausgebildet sind, um Licht zu beugen. Im Gegensatz zu den Mikrostrukturen von Lentikularlinsensystemen, deren charakteristische Dimensionen im Bereich von Mikrometern liegen, findet eine Beugung von Licht an Strukturen statt, deren charakteristische Strukturgrößen Abmessungen in der Größenordnung der Lichtwellenlänge des Lichts aufweisen, welches durch die Strukturen gebeugt werden soll.

Die DE 101 57 534 C1 beschreibt ein Sicherheitselement aus einem Kunststofflaminat, welches ein mosaikartig aus Flächenelementen zusammengesetztes Flächenmuster aufweist. Wenigstens in zwei der Flächenelemente ist je eine aus einer Überlagerung einer niederfrequenten Gitterstruktur mit einer hochfrequenten Reliefstruktur erzeugte Beugungsstruktur abgeformt. In dem einen Flächenelement sind ein Gittervektor der Gitterstruktur und ein Reliefvektor der Reliefstruktur parallel und im anderen Flächenelement schließen der Gittervektor und der Reliefvektor einen im Wesentlichen rechten Winkel ein. Weiter sind die Gittervektoren der Gitterstrukturen in den beiden Flächenelementen parallel. Eine gemeinsame Berandung der beiden Flächenelemente ist nur bei einer Beleuchtung mit linear polarisiertem Licht sichtbar, bei Tageslicht weisen beide Flächenelemente die gleiche Flächenhelligkeit auf.

Aus der EP 1 718 475 A1 ist ein Sicherheitselement für Sicherheitspapiere und Wertdokumente, mit einer transparenten Folie mit einem Oberflächenrelief in Form eines Linsenrasters bekannt, das einen Codierungsbereich aufweist, in dem die optischen Eigenschaften des Linsenrasters von den optischen Eigenschaften des Linsenrasters außerhalb des Codierungsbereichs abweichen, und bei dem die Rasterelemente des Linsenrasters eine lang gestreckte Form mit einer longitudinalen Achse aufweisen, wobei das Linsenraster an verschiedenen Stellen Rasterelemente mit unterschiedlicher Ausrichtung der longitudinalen Achse enthält. Bei einer Ausführungsform ist vorgesehen, über dem Linsenraster Beugungsstrukturen beispielsweise in einer das Linsenraster überlagernden transparenten Folie anzuordnen. Hierdurch soll ein Abformen des Linsenrasters erschwert werden und ein Abformversuch anhand des Fehlens oder der Beschädigung der Beugungsstrukturen erkennbar sein.

Grundsätzlich besteht das Bedürfnis, stets verbesserte Sicherheitsmerkmale und Sicherheitselemente zu schaffen, deren Nachbildung und/oder Verfälschung, Duplizierung oder Ähnliches erschwert ist und dennoch eine möglichst einfache Verifikation hinsichtlich des Vorhandenseins und/oder der Integrität der Sicherheitsmerkmale oder darin gespeicherter Informationen ermöglichen.

Der Erfindung liegt somit die Aufgabe zugrunde, ein verbessertes Sicherheitselement, beispielsweise ein verbessertes Sicherheitsdokument, oder ein Halbzeug für dessen Herstellung zu schaffen, ein Verfahren zu dessen Herstellung anzugeben, ein Laminationsblech und eine verbesserte Verifikationsmethode anzugeben, wobei die verbesserte Sicherheitselemente schwerer manipulierbar oder nachahmbar als die bekannten Sicherheitsmerkmale sind, das Herstellungsverfahren und das Laminationsblech eine Vereinfachung des Produktionsprozesses bietet und das Verifikationsverfahren eine einfache zuverlässige Prüfung des Sicherheitselements ermöglicht.

Der Erfindung liegt die Idee zugrunde, Mikrostrukturen an einer Schichtoberfläche mit beugenden Strukturen in der Weise zu kombinieren, dass in einem flächigen Bereich, in dem die Mikrostrukturen ausgebildet werden, zusätzlich Beugungsstrukturen ausgebildet werden. Diese werden gemeinsam über eine Strukturierung ein und derselben Oberflächenschicht ausgebildet, wobei die diffraktiven Oberflächenstrukturen zumindest teilflächig auf den Mikrostrukturen ausgebildet sind und ein Teil der Mikrostrukturen frei von diffraktiven Strukturen ist und/oder die diffraktiven Oberflächenstrukturen jeweils nur Teilgebiete der Mikrostrukturen überdecken..

### Definitionen

Als Mikrostrukturen werden alle Strukturen bezeichnet, die mindestens eine charakteristische geometrische Größe (Länge, Abstand, Breite, Höhe, Krümmungsradius, ...) aufweisen, deren "Länge" im Mikrometerbereich im Bereich zwischen 2 µm und 900 µm, bevorzugt im Bereich zwischen 10 µm und 750 µm, weiter bevorzugt im Bereich zwischen 30 und 500 µm, besonders bevorzugt im Bereich von 30 µm bis 300 µm, liegt. In jedem Fall werden als Mikrostrukturen nur Strukturen angesehen, die nicht geeignet sind Licht im sichtbaren Spektralbereich, UV-Spektralbereich oder NIR-Spektralbereich zu beugen.

Als Beugungsstrukturen oder diffraktive Strukturen werden solche Strukturen bezeichnet, deren charakteristische Abstände und Längen im Bereich der Größenordnung der Wellenlänge von Licht liegen, welches von der jeweiligen Beugungsstruktur gebeugt wird. Typische Strukturgrößen liegen somit im Bereich einiger 100 nm bis etwa 1,5 µm abhängig von der Lichtwellenlänge vom UV-, über das sichtbare, bis ins infrarote Lichtspektrum hinein. Strukturen, die elektromagnetische Strahlung im Wellenlängenbereich oberhalb von 1,5 µm beugen, werden im Sinne der hier präsentierten technischen Lehre nicht als Beugungsstrukturen angesehen.

Als Schichtoberfläche einer Kunststoffschicht wird eine Grenzfläche eines Kunststoffs zur umgebenden Gasphase oder dem Vakuum angesehen, welches der umgangssprachlichen Definition einer äußeren Oberfläche entspricht. Als Schichtoberfläche wird jedoch zusätzlich auch die Grenzfläche einer Kunststoffschicht angesehen, an der das Kunststoffmaterial an ein hinsichtlich der die Lichtbeugung und Lichtbrechung betreffenden Eigenschaften abweichendes anderes Kunststoffmaterial angrenzt. Eine Schichtgrenze zwischen Kunststoffmaterialien unterschiedlichen Brechungsindexes stellt somit eine Schichtoberfläche der aneinander angrenzenden Kunststoffschichten im Sinne dieser Beschreibung dar.

Als CLI/MLI wird die Einspeicherung von Informationen in ein Sicherheitselement relativ zu einer Linsenarraystruktur bezeichnet, bei denen die wahrnehmbaren Informationsanteile bei einer Betrachtung durch das Linsenarray hindurch abhängig von einer Betrachtungsrichtung relativ zu einer Ebene oder einer Oberflächennormale einer Ebene sind, in der das Linsenarray ausgebildet ist.

Als Oberflächenstruktur wird jede reliefartige Struktur einer Schichtoberfläche angesehen.

Als diffraktive Oberflächenstruktur wird jede reliefartige Struktur einer Schichtoberfläche angesehen, deren reliefartige Struktur eine Lichtbeugung verursacht. Von der Lichtbeugung wird die Lichtbrechung unterschieden, die im Wesentlichen durch unterschiedliche Lichtausbreitungsgeschwindigkeiten in unterschiedlichen Medien bedingt ist.

Als transparentes Kunststoffmaterial wird ein Material bezeichnet, durch welches hindurch zumindest in einem Wellenlängenbereich eine optische Abbildung gemäß der geometrischen Optik möglich ist. Dieses ist im Wesentlichen damit gleichzusetzen, dass durch eine solche transparente Schicht hindurch eine abbildende Erfassung beispielsweise von Schriftzeichen oder eines Bildes möglich ist.

Als laserfähiges oder lasermarkierbares Kunststoffmaterial wird ein Kunststoffmaterial angesehen, welches Zusatzstoffe enthält, die deren Transparenzeigenschaften gar nicht oder nahezu gar nicht beeinflussen, jedoch eine Absorption von Licht zumindest einzelner Wellenlängen gegenüber einem Kunststoffmaterial, dem diese Zusatzstoffe nicht zugesetzt sind, steigert, sodass über eine gezielte Lasereinstrahlung eine Markierbarkeit, insbesondere über eine Karbonisierung, gefördert und erleichtert wird.

Als Lasermarkierung wird jedes Verfahren bezeichnet, bei dem über eine gezielte Einstrahlung von Laserstrahlung eine permanente optisch wahrnehmbare Veränderung im Innern des Materials bewirkt wird. Die wahrnehmbare Veränderung wird als Markierung bezeichnet.

### Bevorzugte Ausführungsformen

Insbesondere wird ein Sicherheitselement vorgeschlagen, welches einen Vorrichtungskörper mit einer transparenten Kunststoffschicht umfasst, an deren einer Schichtoberfläche Mikrostrukturen ausgebildet sind, wobei vorgesehen ist, in derselben Schichtoberfläche zusätzlich eine diffraktive Oberflächenstruktur auszubilden. Ein solches Sicherheitselement wird mit einem Verfahren zum Ausbilden eines Sicherheitselement geschaffen, welches die Schritte umfasst: Bereitstellen mindestens einer transparenten Kunststoffschicht und Ausbilden von Mikrostrukturen an einer Schichtoberfläche der mindestens einen Kunststoffschicht, wobei zusätzlich an derselben Schichtoberfläche der mindestens einen transparenten Kunststoffschicht, an der die Mikrostrukturen ausgebildet werden, diffraktive Oberflächenstrukturen ausgebildet werden.

Um ein solches Sicherheitselement zu prüfen, wird ein Verfahren zum Verifizieren eines Sicherheitselements, welches Mikrostrukturen und diffraktive Oberflächenstrukturen umfasst, vorgeschlagen. Dieses umfasst die Schritte: Verifizieren der Mikrostrukturen mittels eines optischen Erfassungsverfahrens, wobei beim Verifizieren der Mikrostrukturen geprüft wird, ob mittels des optischen Erfassungsverfahrens zusätzlich ein diffraktiver optischer Effekt erfasst wird und ein Verifizierungsergebnis abgeleitet wird, welches das Sicherheitselement als positiv verifiziert angibt, wenn das Verifizieren der Mikrostrukturen ein positives Verifikationsergebnis liefert und zusätzlich zumindest der diffraktive Effekt erfasst ist.

Es wird somit ein Sicherheitsmerkmal geschaffen, welches zum einen durch Mikrostrukturen und zum andern durch diffraktive Oberflächenstrukturen bestimmt wird. Diese werden so beschaffen, dass beim Prüfen der Mikrostrukturen unmittelbar auch ein diffraktiver Effekt auftritt, der als zusätzliches Prüfmerkmal in die Verifikation mit eingeht. Im Hinblick auf den Herstellungsprozess bietet das neuartige Sicherheitselement, welches ein Halbzeug oder bereits ein fertiges Sicherheitsdokument sein kann, den Vorteil, dass sowohl die Mikrostrukturen als auch die diffraktiven Oberflächenstrukturen, da sie in derselben Schichtoberfläche ausgebildet werden, in ein und demselben Arbeitsschritt oder Prozess ausgeführt werden können. Gegenüber Ausführungsformen aus dem Stand der Technik, wo die diffraktiven Strukturen häufig in einer anderen Substratschichtoberfläche ausgebildet werden als die Mikrostrukturen, wird ein Herstellungsprozess deutlich vereinfacht. Notwendige Reinigungsschritte oder ein Auftreten von Verunreinigungen, die zwischen zwei Schichten, wenn diese zusammengefügt werden, auftreten können, entfallen vollständig.

Besonders bevorzugt werden die Mikrostrukturen als Linsenarray ausgebildet. Hierbei können alle dem Fachmann bekannten Linsenarrays zum Einsatz kommen, wie sie insbesondere zum Ausbilden von CLI- oder MLI-Merkmalen in Sicherheitsdokumenten verwendet werden.

Besonders bevorzugt werden zylindrische oder sphärische Linsen, deren Krümmungsradien im Bereich von 2 µm bis 900 µm bevorzugter im Bereich von 10 µm bis 750 µm und am bevorzugtesten im Bereich von 30 µm bis 300 µm liegen.

Bei einer weiteren Ausführungsform eines Sicherheitselements umfassen die Mikrostrukturen zusätzlich oder alternativ alphanumerische Zeichen, deren Zeichenhöhe und Zeichenbreite kleiner als 300 µm sind. Solche Mikrostrukturen, die alphanumerische Zeichen dieser Größe darstellen, werden als Mikroschrift-Strukturen bezeichnet.

Über die Verwendung von Mikroschrift ist es möglich, unmittelbar Informationen in die Mikrostrukturen zu speichern. Darüber hinaus sind Mikrostrukturen, welche ein Linsenarray umfassen, in der Regel dafür vorgesehen, gemeinsam mit gedruckten Markierungen oder mittels eines Lasers ausgebildeten oder auszubildenden Markierungen ein CLI-/MLI-Merkmal auszubilden. Über das Ausbilden der optisch wahrnehmbaren Markierungen ist es möglich, Informationen in das Sicherheitselement zu speichern, welche bei der Verifizierung erfasst und ausgewertet werden können. In der WO 03/022598 A1 ist beispielsweise ein Aufzeichnungsträger beschrieben, bei dem aufgedruckte Darstellungselemente im Zusammenwirken mit einer Linsenstruktur eine solche betrachtungswinkelabhängige Informationserfassung zeigen.

Die diffraktiven Oberflächenstrukturen sind bei einer Ausführungsform so ausgebildet, dass diese einen betrachtungswinkelabhängigen Farbeffekt bei einer Betrachtung in breitwandigem Licht, insbesondere Weißlicht, zeigen. Dies bedeutet, dass eine stark wellenlängenabhängige Beugung von Licht stattfindet. Aufgrund der Wellenlängenselektivität der Beugung wird Licht unterschiedlicher Wellenlängen unter unterschiedlichen Winkeln gebeugt, sodass hierdurch ein wahrnehmbarer Farbeffekt entsteht.

Häufig ist es jedoch wünschenswert, eine zusätzliche Information mittels der diffraktiven Oberflächenstruktur zu speichern. Daher umfassen bei einer Ausführungsform die diffraktiven Oberflächenstrukturen ein Prägehologramm. Hierüber ist es möglich, eine Information, welche bei geeignetem Fertigungsverfahren auch sicherheitselementindividuell gestaltet sein kann, eine Information in den diffraktiven Oberflächenstrukturen zu speichern, welche bei der Verifikation ausgelesen werden kann.

Eine Nachbildung wird besonders dadurch erschwert, dass die diffraktiven Oberflächenstrukturen zumindest teilflächig auf den Mikrostrukturen ausgebildet sind oder werden. Als auf den Mikrostrukturen ausgebildet gilt eine diffraktive Struktur dann, wenn diese sich in einem Bereich der Substratschichtoberfläche befindet, in der diese durch die Mikrostrukturen gegenüber einer ebenen glatten Fläche verformt ist. Es ist somit möglich, dass sämtliche diffraktive Strukturen auf einem Teil der Mikrostrukturen ausgebildet sind, Es ist jedoch auch möglich, dass ein Teil der Mikrostrukturen frei von diffraktiven Strukturen ist, d.h. dass die Mikrostrukturen nur in einem Teilbereich an ihrer Oberfläche mit diffraktiven Strukturen ausgebildet werden oder sind. In einem Teilbereich der Mikrostrukturen kann somit beispielsweise ein CLI- oder MLI-Effekt realisiert werden, der in diesem Bereich nicht mit einem diffraktiven Effekt verknüpft ist, ein anderer Bereich jedoch ein CLI-Merkmal aufweist, bei dem der diffraktive Effekt beobachtbar ist.

Werden nur Teilbereiche der Mikrostrukturen mit diffraktiven Oberflächenstrukturen versehen, so kann eine Information über die geometrische Form der Teilbereiche gespeichert werden. Über die bei der Verifizierung auftretende oder beobachtbare Lichtbeugung treten diese Teilbereiche, die beispielsweise die Form und/oder Gestalt von alphanumerischen Zeichen aufweisen können, hervor, sodass die in der geometrischen Form, z.B. den Schriftzeichen, gespeicherte Information erfassbar ist.

Bei wieder einer anderen nicht erfindungsgemäßen Ausführungsform oder Weiterbildung ist zumindest ein Teilbereich der diffraktiven Oberflächenstrukturen im Bereich der Mikrostruktur angeordnet, jedoch jeweils nur in solchen Bereichen, in denen die Schichtoberfläche durch die Mikrostrukturen unverformt oder eben parallel zu der Schichtoberfläche ausgebildet ist. Durch die Schichtoberfläche ist somit eine Ebene definiert. Die diffraktiven Oberflächenstrukturen sind nur in dieser Ebene oder hierzu parallelen Ebenen der Schichtoberfläche ausgebildet. Die Ebene der Schichtoberfläche wird hierbei unabhängig von den Mikrostrukturen und den diffraktiven Oberflächenstrukturen ermittelt. Sind die

Mikrostrukturen als regelmäßiges Linsenarray ausgebildet, so sind die diffraktiven Oberflächenstrukturen zwischen den einzelnen Linsenelementen angeordnet. Bei einer Ausführungsform sind somit die diffraktiven Oberflächenstrukturen zwischen den Mikrostrukturen verschachtelt auf der Substratschichtoberfläche angeordnet.

Besonders vorteilhaft werden die Mikrostrukturen und die diffraktiven Oberflächenstrukturen zeitgleich mittels eines Prägewerkzeugs in die Schichtoberfläche der mindestens einen transparenten Kunststoffschicht eingeformt. Besonders bevorzugt erfolgt das Einformen während eines Laminationsschritts, bei dem die mindestens eine transparente Kunststoffschicht mit anderen Substratschichten zu einem Verbundkörper verbunden wird, der den Vorrichtungskörper des Sicherheitselements darstellt.

Besonders bevorzugt wird das Sicherheitselement als Sicherheitsdokument ausgebildet, sodass der Vorrichtungskörper ein Dokumentkörper ist. In diesen können eine Vielzahl von Sicherheitsmerkmalen und weiteren Sicherheitselementen integriert sein oder werden. Insbesondere wenn die Mikrostrukturen zumindest teilweise als Linsenarray ausgebildet sind oder werden, werden oder sind mittels eines Lasers unter unterschiedlichen Einstrahlrichtungen unterschiedliche Informationen in Form von Lasermarkierungen eines CLI oder MLI in die Kunststoffschicht und/oder die weiteren Kunststoffschichten gespeichert. Hierfür werden oder sind die Kunststoffschicht, auf deren Schichtoberfläche die Mikrostrukturen und die diffraktiven Oberflächenstrukturen ausgebildet werden oder sind, und/oder eine weitere Kunststoffschicht, welche auf der von der Schichtoberfläche abgewandten Seite der Kunststoffschicht angeordnet wird oder ist, laserfähig ausgebildet.

Wird ein CLI- oder MLI-Merkmal mittels der Mikrostrukturen realisiert, so sind oder werden im Innern des Verbundkörpers Informationen gespeichert, sodass unterschiedliche Informationsanteile durch die Mikrostrukturen hindurch unter unterschiedlichen Betrachtungsrichtungen erfassbar sind. Bei einer Verifikation werden dann beim Ausführen des Erfassungsverfahrens das Sicherheitselement unter verschiedenen Erfassungswinkeln optisch erfasst und die Mikrostrukturen verifiziert, indem geprüft wird, ob eine mittels des Erfassungsverfahrens erfasste Information, die in dem Sicherheitselement gespeichert ist, sich abhängig von dem Erfassungswinkel beim optischen Erfassen ändert.

Bei einer anderen Ausführungsform oder Weiterbildung des Verifikationsverfahrens gilt ein diffraktiver Effekt als erfasst, wenn eine erfassungswinkelabhängige Farbänderung gebeugten Lichts erfasst wird.

Bei einer anderen Ausführungsform wird zusätzlich untersucht, ob in dem gebeugten Licht ebenfalls eine Information codiert ist, wie dies beispielsweise bei Verwendung eines Prägehologramms der Fall sein kann oder über die geometrische Form der Bereiche, in denen eine Lichtbeugung erfasst wird, wie oben erläutert ist.

Neben der Ausbildung der Mikrostrukturen und der diffraktiven Oberflächenstrukturen während des Laminationsvorgangs können die Strukturen auch gemeinsam mittels eines Ultraschall verwendenden Prägeverfahrens in eine Substratschichtoberfläche eingeprägt werden.

Nach einem weiteren Aspekt der Erfindung wird ein Laminationsblech zum Ausbilden eines Sicherheitselements in einer Schichtoberfläche einer Kunststoffschicht geschaffen, wobei das Laminationsblech eine Prägeoberfläche aufweist, die als Kontaktfläche mit der Kunststoffschicht bei einem Laminationsverfahren vorgesehen ist, wobei die Prägeoberfläche ein Oberflächenrelief zum Einprägen von Mikrostrukturen in eine Schichtoberfläche die Kunststoffschicht bei dem Laminationsverfahren umfasst, wobei in derselben Prägeoberfläche das Oberflächenrelief so ausgebildet ist, das bei dem Laminationsverfahren zeitgleich mit dem Einprägen der Mikrostrukturen auch zusätzlich diffraktive Oberflächenstrukturen in derselben Schichtoberfläche der Kunststoffschicht eingeprägt werden oder einprägbar sind. Vorteil ist, dass kein zusätzliches Prägewerkzeug benötigt wird und auch kein zusätzlicher Verfahrensschritt zum Ausbilden der Mikrostrukturen und der diffraktiven Oberflächenstrukturen notwendig ist.

Weiterbildungen des Laminationsblechs weisen im Hinblick auf die Ausbildung des Oberflächenreliefs dieselben Merkmale auf, wie sie im Zusammenhang mit der Ausbildung der Mikrostrukturen und der diffraktiven Oberflächenstrukturen in einem Sicherheitselement beschrieben sind, wobei das Oberflächenrelief jeweils so ausgebildet ist, um die entsprechenden Mikrostrukturen und diffraktiven Oberflächenstrukturen einprägen zu können.

Eine weitere Möglichkeit des Ausbildens insbesondere der diffraktiven Oberflächenstrukturen besteht in der Oberflächenbearbeitung mittels Laserstrahlung. Insbesondere Kurzpuls- und/oder Ultrakurzpulslaserstrahlung mit Pulsdauern im Pikosekunden- oder Femtosekundenbereich kann hierzu genutzt werden. Insbesondere können so Interferenzstrukturen zwischen kohärenten Laserpulsen direkt in die Oberfläche eingeformt werden. Aber auch eine Laserablation, die keine Interferenzeffekte nutzt kann zur Oberflächenbearbeitung genutzt werden.

Nachfolgend wird die Erfindung unter Bezugnahme auf eine Zeichnung näher erläutert. Hierbei zeigen:
- Fig. 1: eine schematische Schnittansicht durch ein Sicherheitselement;
- Fig. 2: eine schematische Schnittansicht durch ein weiteres Sicherheitselement;
- Fig. 3: wieder eine schematische Ansicht noch einer weiteren Ausführungsform eines Sicherheitselements;
- Fig. 4: eine schematische Draufsicht auf ein als Sicherheitsdokument ausgebildetes Sicherheitselement;
- Fig. 5: eine schematische Draufsicht auf ein Sicherheitselement mit einer Mikrostruktur und einer diffraktiven Oberflächenstruktur;
- Fig. 6: eine weitere schematische Draufsicht auf ein Sicherheitselement, bei der die Mikrostruktur und die diffraktive Oberflächenstruktur im Wesentlichen zueinander parallel verlaufende Strukturelemente aufweisen;
- Fig. 6a: eine schematische perspektivische Ansicht eines Ausschnitts der Schichtoberfläche im Bereich der Mikrostrukturen;
- Fig. 7: eine schematische Draufsicht auf ein Sicherheitselement, bei dem die Mikrostrukturen und die diffraktiven Oberflächenstrukturen zueinander im Wesentlichen senkrecht orientierte Strukturelemente aufweisen;
- Fig. 8: eine schematische Draufsicht auf ein als Sicherheitselement ausgebildetes Sicherheitselement;
- Fig. 9: eine weitere schematische Ansicht eines als Sicherheitsdokument ausgebildeten Sicherheitselements;
- Fig. 10: eine weitere schematische Schnittansicht durch ein Sicherheitselement, bei dem die Mikrostrukturen oder die diffraktiven Oberflächenstrukturen miteinander verschachtelt ausgebildet sind;
- Fig. 11: ein Laminationsblech zum Einprägen der Mikrostrukturen und der diffraktiven Oberflächenstrukturen des Sicherheitselements nach Fig. 10 in einem Laminationsverfahren; und
- Fig. 12: ein schematischer Ausschnitt einer Kunststoffschicht eines Sicherheitsdokuments mit einem Mikrolinsenarray, bei dem eine diffraktive Oberflächenstruktur nur auf einigen Mikrolinsen ausgebildet ist und auf anderen Mikrolinsen nicht.

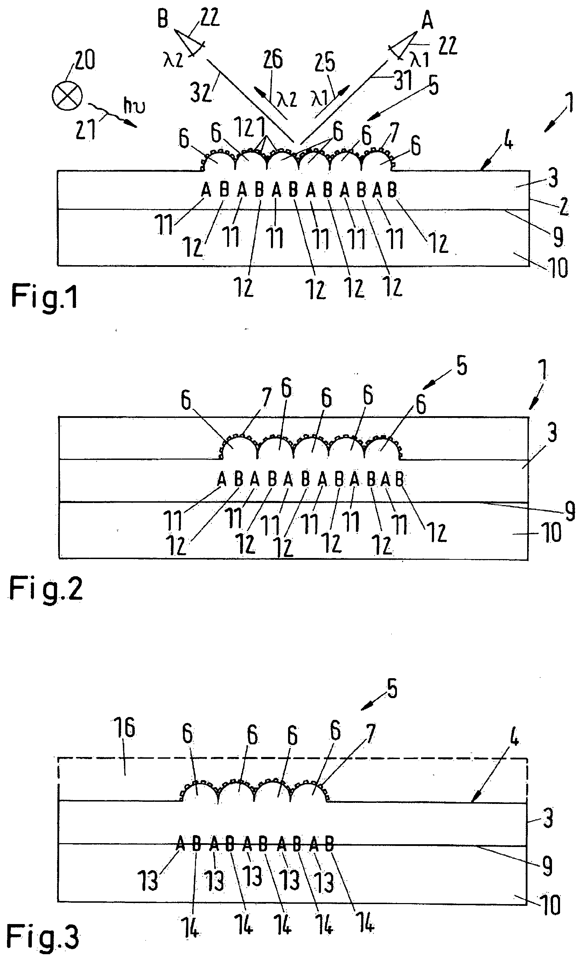

In Fig. 1 ist schematisch ein Sicherheitselement 1 dargestellt. Dieses umfasst einen Vorrichtungskörper 2, der in diesem Fall als Verbundkörper ausgebildet ist. Der Vorrichtungskörper 2 umfasst eine transparente Kunststoffschicht 3, welche beispielsweise aus Polycarbonat (PC), Polyethylen (PE), Polyethylenterephthalat (PET), Polyvinylchlorid (PVC) oder anderen dem Fachmann bekannten Kunststoffmaterialien hergestellt ist, welche im Bereich der Sicherheitsdokumentenherstellung verwendet werden. An einer Schichtoberfläche 4 der Kunststoffschicht 3 sind Mikrostrukturen 5 in Form von Linsenelementen 6 ausgebildet. Die Linsenelemente 6 der Mikrostrukturen 5 weisen selbst an der Oberfläche eine Feinstrukturierung in Form diffraktiver Oberflächenstrukturen 7 auf. Diese können beispielsweise als im Wesentlichen rechteckförmige Nuten oder Gräben 12 ausgebildet sein, die parallel zur Erstreckung der beispielsweise als Zylinderlinsen ausgebildeten Linsenelemente 6 ausgebildet sind.

An einer von der Schichtoberfläche 4 abgewandten Unterseite 9 der Kunststoffschicht 3 ist in der dargestellten Ausführungsform eine weitere Substratschicht 10 mit der Kunststoffschicht 3 zu dem Verbundkörper 2 verbunden. Vorzugsweise sind die Kunststoffschicht 3 und die weitere Substratschicht 10 auf Basis desselben Polymers hergestellt und ein Laminationsverfahren zu einem Verbundkörper zusammengefügt, der den Vorrichtungskörper 2 bildet. Sind die Kunststoffschicht 3 und die weitere Substratschicht 10 auf Basis desselben Kunststoffmaterials bzw. desselben Polymermaterials hergestellt, so kann in einem Laminationsverfahren das Zusammenfügen so erfolgen, dass in dem Verbundkörper 2 kein Phasenübergang hinsichtlich der Kunststoffstruktur erkennbar ist.

Um im Zusammenwirken mit den Mikrostrukturen 5 beispielsweise ein CLI-Merkmal ausbilden zu können, ist entweder die Kunststoffschicht 3 oder eine darunter liegende Substratschicht, beispielsweise die Substratschicht 10, als so genannte laserfähige Schicht ausgebildet, in der über Einstrahlung von Laserlicht durch die Linsenelemente 6 der Mikrostrukturen 5 erste und zweite Lasermarkierungen 11, 12 einbringbar sind. Bevorzugt ist die Kunststoffschicht 3 nicht laserfähig und die Substratschicht 10 laserfähig ausgebildet. Während die ersten Lasermarkierungen 11, welche über den Buchstaben "A" gekennzeichnet sind, unter einer ersten Belichtungsrichtung mittels eines Laserstrahls markiert sind, sind die zweiten Lasermarkierungen, welche durch den Buchstaben "B" angedeutet sind, unter einer hiervon abweichenden zweiten Belichtungsrichtung markiert. Wird das Sicherheitselement 1 beim Verifizieren mittels einer Erfassungseinrichtung 22, welches beispielsweise eine Kamera oder ein Auge eines Verifizierungspersonals sein kann, optisch erfasst, so sind abhängig von der Betrachtungsrichtung 31, 32 durch die Mikrostrukturierungen hindurch, d.h. durch die Linsenelemente 6 hindurch, abhängig von der Betrachtungsrichtung die ersten Lasermarkierungen 11 (A) oder die zweiten Lasermarkierungen 12 (B) erfassbar. Dies ist dadurch angedeutet, dass unter der ersten Betrachtungsrichtung 31 neben der Erfassungseinrichtung 22 der Informationsgehalt "A" der ersten Lasermarkierungen 11 neben der Erfassungseinrichtung 22 unter der zweiten Betrachtungsrichtung 32 der Inhalt der zweiten Lasermarkierung 12 "B" dargestellt ist.

Das von einer Lichtquelle 20 stammende Licht 21 wird zusätzlich an der diffraktiven Oberflächenstrukturen 7 zumindest zum Teil wellenlängenabhängig gebeugt. Daher wird gebeugtes Licht einer ersten Wellenlänge 25 unter der ersten Betrachtungsrichtung 31 von de Erfassungseinrichtung 22 erfasst und gebeugtes Licht einer zweiten Wellenlänge 26 unter der zweiten Betrachtungsrichtung 32 von der Erfassungseinrichtung 22 erfasst. Dies ist jeweils dadurch angedeutet, dass neben die Erfassungseinrichtung entweder der Buchstabe λ₁ oder der Buchstabe λ₂ dargestellt ist. Beim Verifizieren des Sicherheitselements wird somit beim Verifizieren der Mikrostrukturen 5 das CLI-Merkmal ausgewertet und zusätzlich hierbei ein Farbwechsel erfasst, der nicht durch die Farbe der Lasermarkierungen 11, 12 in dem Sicherheitselement 1 bedingt ist.

Um die Mikrostrukturierungen 5 und die diffraktiven Oberflächenstrukturierungen 7 gegen Umwelteinflüsse, beispielsweise mechanische Beschädigung, zu schützen, ist bei der Ausführungsform nach Fig. 2 zusätzlich eine Lackschicht 16 über der Kunststoffschicht 3 angeordnet. Gleiche technische Merkmale sind in allen Figuren mit denselben Bezugszeichen versehen. Diese weist einen anderen optischen Brechungsindex als die Kunststoffschicht 3 auf. Hierdurch wird gewährleistet, dass die Lichtbeugung an der diffraktiven Oberflächenstrukturen 7 und auch die Lichtbrechung an den Mikrostrukturen 5, welche den CLI-Effekt bewirkt, erhalten bleibt. Bevorzugt wird ein Brechungsindexunterschied von mindestens 0,1. Der Brechungsindex von Kunststoffen kann über die Beimengung von Metalloxidpartikeln, z.B. Titandioxid (TiO₂), welche nicht unmittelbar zu einer Verfärbung und Einschränkung der Transparenz des Kunststoffmaterials führen, beeinflusst werden. Voraussetzung ist, dass der Durchmesser der verwendeten Partikel kleiner als die halbe Wellenlänge des Lichtes ist, da sonst starke Streuung auftritt. Bevorzugt ist der Durchmesser der verwendeten Partikel kleiner als 200 nm, weiter bevorzugt kleiner als 100 nm, besonders bevorzugt kleiner als 50 nm. Die Untergrenze des Durchmessers der Partikel liegt bei 1 nm. Besonders bevorzugt sind Partikel mit einem Durchmesser zwischen 2 nm und 50 nm, besonders bevorzugt zwischen 2 nm und 20 nm.

In Fig. 3 ist eine weitere Ausführungsform eines Sicherheitselements schematisch dargestellt. Die Ausführungsform nach Fig. 3 unterscheidet sich von denen der Fig. 1 und 2 dadurch, dass diese keine Lasermarkierungen 11, 12, sondern dafür Druckmarkierungen 13(A), 14(B) enthält. Diese können beispielsweise auf die Unterseite 9 der Kunststoffschicht 3 aufgedruckt sein. Es sind erneut Ausführungsformen mit einer Lackschutzschicht 16 oder ohne eine Lackschutzschicht 16 denkbar. Daher die Kontur der Lackschutzschicht 16 in der schematischen Schnittansicht gestrichelt angedeutet, um das optionale Vorhandensein anzudeuten.

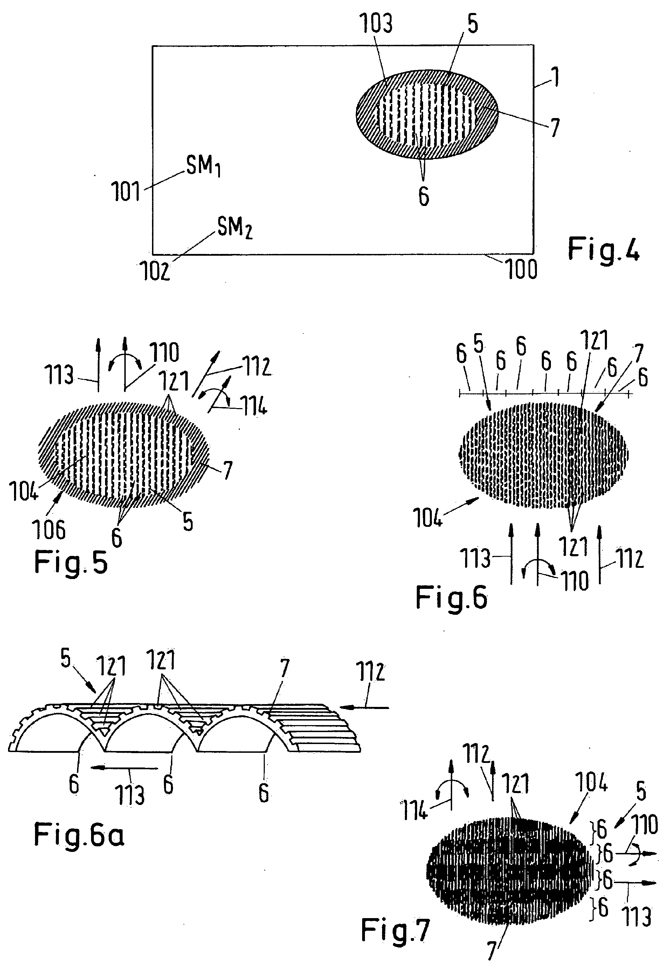

In Fig. 4 ist eine schematische Draufsicht auf ein als Sicherheitsdokument 100 ausgebildetes Sicherheitselement 1 dargestellt. In dem Sicherheitsdokument 100 sind weitere Sicherheitsmerkmale 101, 102 neben dem Sicherheitsmerkmal 103 realisiert, welches im Folgenden ausführlicher beschrieben wird. Es versteht sich für den Fachmann, dass die Sicherheitsmerkmale 101, 102 nur exemplarisch für eine Vielzahl von unterschiedlichen Sicherheitsmerkmalen und anderen Sicherheitselementen angedeutet sind, die in dem Sicherheitsdokument 100 realisiert sein können. Beispielhaft seien hier nur Volumenhologramme, Sicherheitsdrucke als einige Beispiele genannt. Das Sicherheitsmerkmal 103 umfasst Mikrostrukturen 5 und zusätzliche diffraktive Oberflächenstrukturen 7. Eine beispielhafte Ausgestaltung ist in Fig. 5 dargestellt.

Die Mikrostruktur in Fig. 5 umfassen erneut zylinderartige Linsenelemente eines Linsenarrays. Umrandet wird das Linsenarray 104, welches zylinderartige Linsenelemente 6 umfasst, von Oberflächenstrukturen 7, welche beispielsweise als Gräben 121 mit einem im Wesentlichen rechteckigen Querschnitt ausgebildet sind. Eine Verlaufsrichtung 112 der Gräben 121 weicht von einer Zylinderachse 113 der zueinander parallel orientierten Linsenelemente 6 ab. Bei einer Verkippung um eine Schwenkachse 110, welche kollinear zu den Zylinderachsen 113 ist, lässt sich im Zusammenwirken mit Markierungen (nicht dargestellt) in dem Sicherheitsdokument 100 ein CLI-Effekt beobachten. Zugleich wird auch ein Farbwechsel in der Umrandung 106 beobachtet, da sich bei einer solchen Verschwenkung die wellenlängenabhängige Beugung ebenfalls leicht ändert.

Ein optimaler Farbwechseleffekt ist jedoch zu beobachten, wenn eine Verschwenkung um eine weitere Schwenkachse 114, welche kollinear mit der Verlaufsrichtung 112 der grabenartigen Oberflächenstrukturen 7 erfolgt.

In Fig. 6 ist eine weitere Ausgestaltung des Sicherheitsmerkmals 103 schematisch dargestellt. Bei dieser Ausführungsform sind erneut die diffraktiven Oberflächenstrukturen 7 als rechteckförmige Gräben 121 ausgebildet, deren Verlaufsrichtung parallel zu den zylinderartig ausgebildeten Linsenelemente 6 verlaufen.

In Fig. 6a ist eine schematische perspektivische Ansicht eines Ausschnitts der Schichtoberfläche 4 dargestellt. Zu erkennen sind drei Ausschnitte von Zylinderlinsenelementen 6, auf denen jeweils eine Vielzahl von Gräben 121 mit rechteckförmigem Querschnitt als diffraktive Oberflächenstrukturen 7 ausgebildet ist. Eine Verkippung um die Schwenkachse 110, welche parallel zu den Zylinderachsen 113 der Linsenelemente 6 ausgebildet ist, führt in diesem Fall sowohl zu einer farbwellenlängenselektiven Beugung an den diffraktiven Oberflächenstrukturen 7, d.h. den Gräben 121, als auch zu einer Änderung der beobachtbaren Markierungen im Innern des Sicherheitsdokuments 100 bzw. Sicherheitselements 1.

In Fig. 7 ist eine weitere Ausführungsform schematisch in Draufsicht dargestellt. Bei dieser sind die Oberflächenstrukturen 7 wieder beispielsweise in Form von rechteckförmigen Gräben 121 erneut vertikal ausgebildet, die Lentikularlinsen oder Linsenelemente 6 des Linsenarrays 104 jedoch horizontal. Dies bedeutet, dass die Zylinderachsen 113 der Linsenelemente 6 senkrecht auf den Verlaufsrichtungen 112 der Gräben 121 mit rechteckförmigem Querschnittsprofil stehen. Ein Verschwenken um die Schwenkachse 110, welche in diesem Fall waagerecht oder horizontal ausgebildet ist und kollinear mit den Zylinderachsen 113 ist, führt zu einer Änderung der in den Markierungen gespeicherten CLI-Information. Bei einem solchen Verschwenken findet in erster Näherung keine Änderung der wellenlängenabhängigen Beugung an den Gräben 121 der Oberflächenstrukturen 7 statt. Bei einer Verschwenkung um die weitere Schwenkachse 114, welche kollinear zu den Verlaufsrichtungen 112 der Gräben 121 ist, findet jedoch eine Änderung der wellenlängenabhängigen Beugung und somit ein beobachtbarer Farbeffekt statt, jedoch keine Änderung der wahrnehmbaren CLI-Information, welche in den Lasermarkierungen oder Druckmarkierungen gespeichert ist.

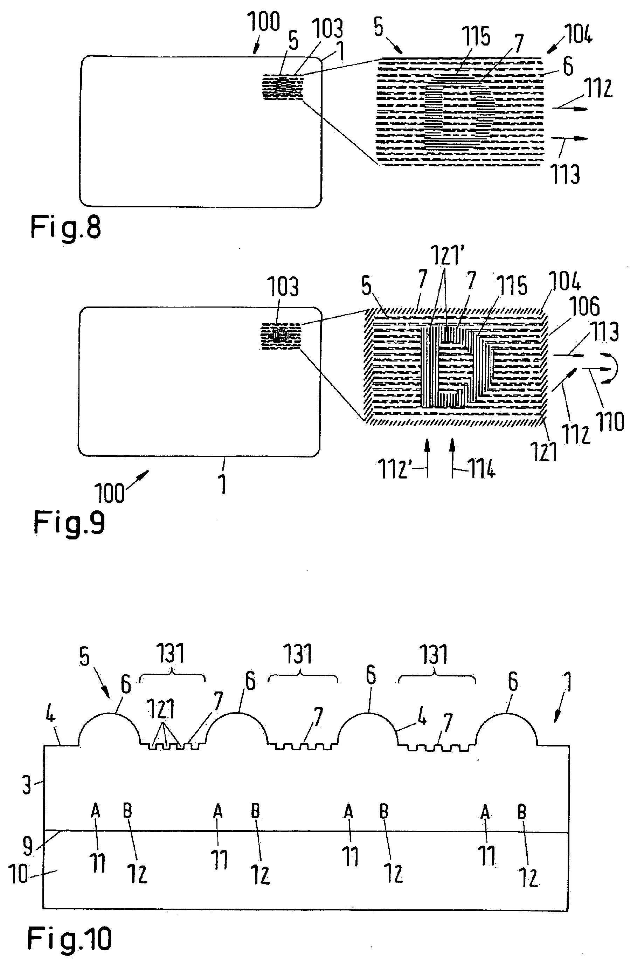

In Fig. 8 ist ein Ausführungsbeispiel dargestellt, bei dem ein Sicherheitselement 1 erneut als Sicherheitsdokument 100 ausgebildet ist. Schematisch ist lediglich ein Sicherheitsmerkmal 103 dargestellt, welches Mikrostrukturierungen 5 in Form von waagerecht orientierten zylinderartigen Linsenelementen 6 aufweist. In einem Teilbereich 115, welcher die Struktur des Großbuchstaben D aufweist, sind auf den Zylinderlinsen Oberflächenstrukturen 7 beispielsweise in Form von Gräben mit einem rechteckigen Querschnitt ausgebildet, deren Erstreckungsrichtung 112 parallel zu den Zylinderachsrichtungen 113 sind. Ein Verkippen um die Schwenkachse 110, welche parallel zu den Zylinderachsen 113 der Linsenelemente 6 des Linsenarrays 104 ausgerichtet ist, führt sowohl zu einem Farbeffekt aufgrund der wellenlängenabhängigen Beugung an den Oberflächenstrukturierungen 7 als auch zu einer Änderung der Wahrnehmung der CLI-Information statt. Der Buchstabe "D" ist somit auf dem Linsenarray 104 als sich farblich ändernde Struktur beim Verifizieren des CLI-Merkmals sichtbar.

In Fig. 9 ist eine ähnliche Ausführungsform zu der nach Fig. 8 schematisch dargestellt. Diese unterscheidet sich dadurch, dass das Linsenarray 104 eine Umrandung 106 aufweist, indem die diffraktiven Oberflächenstrukturen beispielsweise in Form von rechteckförmigen Gräben 121 ausgebildet sind, deren Verlaufsrichtung 112 von der Zylinderachse 113 der Zylinderlinsen abweicht. Zusätzlich sind in einem Teilbereich 115, welcher die Form des Großbuchstaben D aufweist, auf den Linsenelementen 6 Oberflächenstrukturen 7 ausgebildet, welche in Form erneut von Gräben 121' ausgebildet sind, welche einen rechteckförmigen Querschnitt aufweisen. Die Verlaufsrichtung 112' der Gräben 121' ist senkrecht zu den Zylinderachsen 113 der Linsenelemente 6 orientiert. Bei dieser Ausführungsform bewirkt eine Verkippung um die Schwenkachse 110, welche parallel zu den Zylinderachsen 113 ausgerichtet ist, sowohl eine Änderung der wahrnehmbaren CLI-Information als auch eine Farbänderung im Bereich der Umrandung 106. Bei einer Verkippung um die weitere Schwenkachse 114', welche parallel zu der Verlaufsrichtung 112' der Gräben 121' im Bereich des Großbuchstaben D ist, findet eine Farbänderung sowohl im Bereich des Großbuchstaben D als auch der Umrandung 106 statt. Jedoch findet keine Änderung der wahrnehmbaren CLI-Information statt.

Es versteht sich für den Fachmann, dass die Ausrichtung der beispielsweise grabenartig ausgebildeten Oberflächenstruktur auch von 0° oder 90° abweichende Winkel zu der Verlaufsrichtung der Zylinderlinsen aufweisen können. Auch in einem solchen Fall sind die diffraktiven Oberflächenstrukturen bei einer geeigneten Verkippung über einen Farbwechseleffekt wahrnehmbar. Bei anderen Ausführungsformen ist es möglich, die diffraktiven Oberflächenstrukturen in Form eines Oberflächenhologramms auszubilden, welches eine Information speichert, die sich betrachtungswinkelabhängig ändern kann.

In Fig. 10 ist schematisch eine weitere Ausführungsform dargestellt, bei der die diffraktiven Oberflächenstrukturen 7 verschachtelt mit den Mikrostrukturen 5 ausgebildet sind. Die Mikrostrukturen 5 umfassen erneut zylinderartige Linsenelemente 6, welche gemeinsam mit Lasermarkierungen 11, 12 (A, B) ein CLI-Merkmal ausbilden. In den Bereichen 131 der Schichtoberfläche 4, welche durch die Mikrostrukturen 5, d.h. die Linsenelemente 6, nicht verformt ist, sind verschachtelt zwischen den Linsenelementen 6 diffraktive Oberflächenstrukturen erneut exemplarisch in Form von rechteckförmigen Gräben 112 ausgebildet. Ebenso können die Oberflächenstrukturen 7 Bestandteile eines Oberflächenhologramms, d.h. Teile eines ansonsten als Prägehologramm ausbildbaren Hologramms, darstellen.

Bei allen Ausführungsformen werden die Mikrostrukturen 5 und die diffraktiven Oberflächenstrukturen 7 vorzugsweise in demselben Fertigungsschritt in die Schichtoberfläche der Kunststoffschicht 3 eingebracht. Besonders vorteilhaft erfolgt dies mit Hilfe von Prägeblechen oder Kaschierblechen während eines Hochdruckhochtemperaturlaminationsverfahrens, bei dem die Kunststoffschicht 3 mit weiteren Kunststoffschichten und gegebenenfalls zusätzlich zwischen diesen angeordneten weiteren Elementen zu einem Verbundkörper verbunden wird. Dieser Verbundkörper stellt dann den Vorrichtungskörper des Sicherheitselements dar. Bei dem Verbundkörper kann es sich um ein Halbzeug oder ein fertiges Erzeugnis, beispielsweise ein Sicherheitsdokument, in seinen verschiedenen Ausprägungen handeln. Gegebenenfalls findet eine Personalisierung oder Individualisierung über ein Einbringen der Lasermarkierungen erst nach dem Einbringen der Mikrostrukturen und der diffraktiven Oberflächenstrukturen statt.

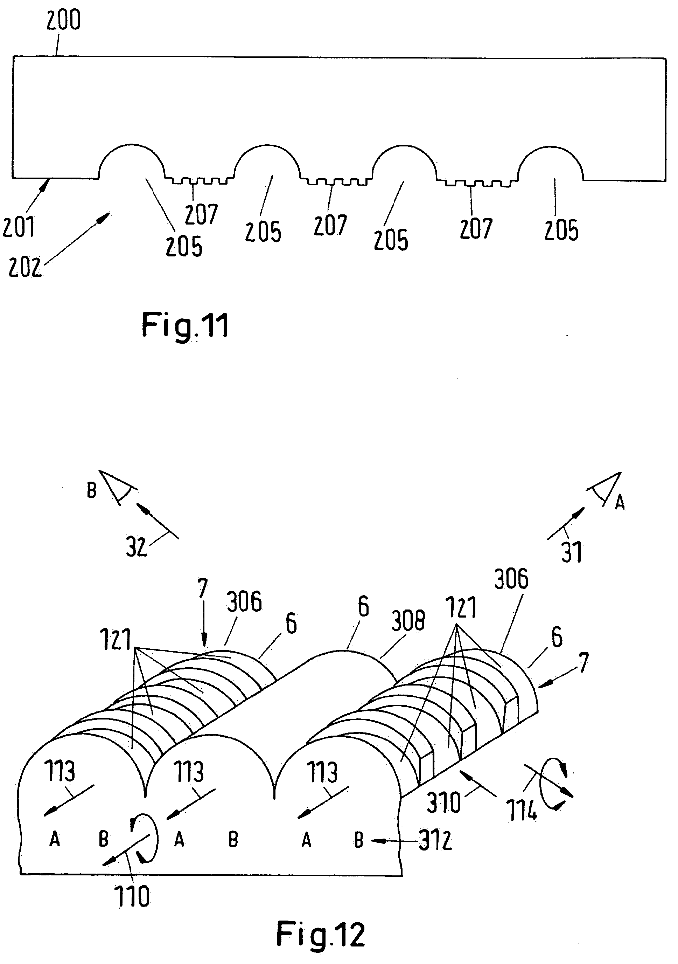

In Fig. 11 ist eine schematische Schnittansicht eines Laminationsblechs 200 dargestellt. Das Laminationsblech 200 umfasst eine Prägeoberfläche 201. Die Prägeoberfläche ist für einen Kontakt mit einer Schichtoberfläche einer Kunststoffschicht, z. B. der Schichtoberfläche 4 der Kunststoffschicht 5 des Sicherheitselements 1 nach Fig. 10, bei einem Ausbilden eines Vorrichtungskörpers in einem Laminationsverfahren vorgesehen. Die Prägeoberfläche 201 weist ein Oberflächenrelief 202 auf, welches inverse Mikrostrukturen 205 und zusätzlich inverse diffraktive Oberflächenstrukturen 207 umfasst, die angepasst und invers oder negativ zu den in dem auszubildenden Sicherheitselement auszubildenden Mikrostrukturen und diffraktiven Oberflächenstrukturen sind. Es versteht sich, dass die inversen Mikrostrukturen 205 und die inversen diffraktiven Oberflächenstrukturen 207 leichte Dimensionsunterschiede und Formabweichungen aufweisen können, um ein Entformen und dabei auftretende Modifikationen an den eingeprägten Strukturen und/oder Schrumpfungsprozesse beim Abkühlen der Kunststoffschicht nach dem eigentlichen Laminationsvorgang mit berücksichtigen zu können.

In Fig. 12 ist ein schematischer Ausschnitt einer Kunststoffschicht 3 eines Sicherheitsdokuments dargestellt. Bei dieser Ausführungsform ist eine Mehrzahl von als Zylinderlinsenelementen 6 Mikrostrukturen gezeigt. Eine Teilmenge 306 der Zylinderlinsenelementen 6 weisen diffraktive Oberflächenstrukturen 7 auf, die zur Veranschaulichung über eine Vielzahl von Gräben 121 angedeutet sind. Eine Verlaufsrichtung 310 der Gräben 121 ist quer zu den Zylinderachsen 113 orientiert. Eine weitere Teilmenge 308 der Zylinderlinsenelemente 6 weist keine diffraktiven Oberflächenstrukturen auf. Ebenso ist es möglich das einzelne Zylinderlinsenelemente 6 nicht entlang ihrer gesamten Länge entlang der Zylinderachse 113 mit diffraktiven Oberflächenstrukturen 7 versehen sind, sondern nur in einem oder mehreren Abschnitten.

Bei der Verifikation zeigen die Zylinderlinsenelemente 6 der weiteren Teilemenge 308, oder verallgemeinert jene Abschnitte der Zylinderlinsenelemente 6, keine Beugungseffekte, auf oder in denen keine diffraktiven Oberflächenstrukturen 7 ausgebildet sind.

Durch die Linsenelemente 6 sind verschiedene CLI-Informationen 312, angedeutet durch die Buchstaben "A" und "B", unter unterschiedlichen Betrachtungsrichtungen 31, 32 abhängig von einer Rotation um eine Schwenkachse 110 parallel zu den Zylinderachsen 113 beobachtbar. Im Bereich der Zylinderlinsenelemente 6 der Teilmenge 306 ist zusätzlich beispielsweise ein beugungsbedingter Farbeffekt zu beobachten, welcher abhängig von einer Einfallsrichtung des Licht und/oder einer Betrachtungsrichtung bezüglich einer Verkippung um eine weitere Schwankachse 114 ist. D.h. ein Verkippen um die weitere Schwenkachse 114 bedingt beispielsweise einen Farbwechseleffekt. Dieser tritt im Bereich der Zylinderlinsenelemente 6 der weiteren Teilmenge 308 nicht auf. Somit kann über die Anordnung der den beiden Teilemengen 306, 308 zugeordneten Zylinderlinsenelemente 6 zueinander eine Information codiert werden. Dieses kann ähnlich zu einem Strichcode erfolgen. Bei dem beschriebenen Beispiel führt eine Verkippung um die weitere Schwenkachse 114 in der Regel zu einer Veränderung der wahrgenommenen CLI-Information.

Bei Ausführungsformen, bei denen die diffraktiven Oberflächenstrukturen auch nur in Telbereichen von Zylinderlinsenelementen ausgebildet sein können, können auch andere, z. B. alphanumerische, Informationen über die flächige Anordnung der diffraktiven Bereiche im Verhältnis zu den nicht diffraktiven Bereichen der Zylinderlinsenelemente codiert sein oder werden.

Es können aber auch kompliziertere diffraktive Oberflächenstrukturen Verwendung finden, die eine intrinsisch gespeicherte Information aufweisen, wie dieses beispielsweise bei einem Oberflächenhologramm der Fall sein kann.

Es versteht sich für den Fachmann, dass hier lediglich beispielhafte Ausführungsformen beschrieben sind. Insbesondere können die diffraktiven Oberflächenstrukturen andere geometrische Ausgestaltungen annehmen als die hier beschriebenen Gräben mit rechteckförmigem Querschnitt. Geeignet sind alle Oberflächenstrukturen, welche eine Lichtbeugung im entsprechenden Wellenlängenbereich zeigen. Die diffraktiven Strukturen können ausgebildet sein, eine Lichtbeugung im sichtbaren Licht, im ultravioletten Licht oder im infraroten Wellenlängenbereich zu bewirken.

### Bezugszeichenliste

- 1: Sicherheitselement
- 2: Vorrichtungskörper
- 3: Kunststoffschicht
- 4: Schichtoberfläche
- 5: Mikrostrukturen
- 6: Linsenelemente
- 7: diffraktive Oberflächenstrukturen
- 9: Unterseite
- 10: weitere Substratschicht
- 11: erste Lasermarkierungen (A)
- 12: zweite Lasermarkierungen (B)
- 13: erste Druckmarkierungen (A)
- 14: zweite Druckmarkierungen (B)
- 16: Lackschicht (Schutzschicht)
- 20: Lichtquelle
- 21: Licht
- 22: Erfassungseinrichtung
- 25: gebeugtes Licht einer ersten Wellenlänge λ₁
- 26: gebeugtes Licht einer zweiten Wellenlänge λ₂
- 31: erste Betrachtungsrichtung
- 32: zweite Betrachtungsrichtung
- 100: Sicherheitsdokument
- 101, 102: Sicherheitsmerkmale
- 103: Sicherheitsmerkmal (mit Mikrostrukturen und diffraktiven Oberflächenstrukturen)
- 104: Linsenarray
- 106: Umrandung
- 110: Schwenkachse
- 112, 112': Verlaufsrichtung (von Gräben)
- 113: Zylinderachsen
- 114, 114': weitere Schwenkachse
- 115: Teilbereiche
- 121, 121': Gräben (rechteckförmiger Querschnitt)
- 131: Bereiche ("unverformt", "eben")
- 200: Laminationsblech
- 201: Prägeoberfläche
- 202: Oberflächenrelief
- 205: inverse Mikrostrukturen
- 207: inverse diffraktive Oberflächenstrukturen
- 306: Teilmenge
- 308: weitere Teilmenge
- 310: Verlaufsrichtung
- 312: CLI-Informationen

## Patentansprüche

1. Sicherheitselement (1) umfassend
einen Vorrichtungskörper (2) mit einer transparenten Kunststoffschicht (3),
an deren einer Schichtoberfläche (4) Mikrostrukturen (5) ausgebildet sind,
**dadurch gekennzeichnet, dass**
in derselben Schichtoberfläche (4) zusätzlich ein diffraktive Oberflächenstrukturen (7) ausgebildet sind und die diffraktiven Oberflächenstrukturen (7) zumindest teilflächig auf den Mikrostrukturen (5) ausgebildet sind, wobei ein Teil der Mikrostrukturen frei von diffraktiven Strukturen ist und/oder die Mikrostrukturen (5) nur in einem Teilbereich an ihrer Oberfläche mit den diffraktiven Oberflächenstrukturen (7) ausgebildet sind.

2. Sicherheitselement (1) nach Anspruch 1, **dadurch gekennzeichnet, dass** die Mikrostrukturen (5) ein Linsenarray (104) umfassen.

3. Sicherheitselement (1) nach einem der Ansprüche 1 oder 2, **dadurch gekennzeichnet, dass** die diffraktiven Oberflächenstrukturen (7) ein Prägehologramm umfassen.

4. Verfahren zum Ausbilden eines Sicherheitselements nach Anspruch 1 umfassend die Schritte:
Bereitstellen mindestens einer transparenten Kunststoffschicht (3) und
Ausbilden von Mikrostrukturen (5) an der Schichtoberfläche (4) der mindestens einen Kunststoffschicht (3),
**dadurch gekennzeichnet, dass**
zusätzlich an derselben Schichtoberfläche (4) der mindestens einen transparenten Kunststoffschicht (3), an der die Mikrostrukturen (5) ausgebildet werden, diffraktive Oberflächenstrukturen (7) ausgebildet werden und die diffraktiven Oberflächenstrukturen (7) so ausgebildet werden, dass die diffraktiven Oberflächenstrukturen (7) ganz oder teilweise zumindest auf einem Teil der Oberfläche der Mikrostrukturen (5) ausgebildet werden, wobei ein Teil der Mikrostrukturen frei von diffraktiven Strukturen bliebt und/oder die Mikrostrukturen (5) nur in einem Teilbereich an ihrer Oberfläche mit den diffraktiven Oberflächenstrukturen (7) ausgebildet werden.

5. Verfahren nach Anspruch 4, **dadurch gekennzeichnet, dass** die Mikrostrukturen und die diffraktiven Oberflächenstrukturen (7) zeitgleich mittels Prägewerkzeugen in die Schichtoberfläche (4) der mindestens einen transparenten Kunststoffschicht (3) eingeformt werden.

6. Verfahren zum Verifizieren eines Sicherheitselement (1) nach Anspruch 1, welches Mikrostrukturen (5) und diffraktive Oberflächenstrukturen (7) umfasst, umfassend die Schritte:
Verifizieren der Mikrostruktur mittels eines optischen Erfassungsverfahrens,
**dadurch gekennzeichnet, dass**
beim Verifizieren der Mikrostrukturen (5) geprüft wird, ob mittels des optischen Erfassungsverfahrens zusätzlich ein diffraktiver optischer Effekt erfasst wird und
eine Verifizierungsergebnis abgeleitet wird, welches das Sicherheitselement (1) als positiv verifiziert angibt, wenn das Verifizieren der Mikrostrukturen (5) ein positives Verifizierungsergebnis liefert und zusätzlich zumindest der diffraktive Effekt erfasst ist und wenn ein Teil der Mikrostrukturen den diffraktiven Effekt nicht zeigt und/oder wenn die Mikrostrukturen (5) nur in einem Teilbereich an ihrer Oberfläche den diffraktiven Effekt zeigen.

7. Laminationsblech (200) zum Ausbilden eines Sicherheitselements (1) nach Anspruch 1 in einer Schichtoberfläche (4) einer Kunststoffschicht (3), wobei das Laminationsblech (200) eine Prägeoberfläche aufweist, die als Kontaktfläche mit der Kunststoffschicht (3) bei einem Laminationsverfahren vorgesehen ist, wobei die Prägeoberfläche (201) ein Oberflächenrelief (202) zum Einprägen von Mikrostrukturen (5) in eine Schichtoberfläche (4) die Kunststoffschicht (3) bei dem Laminationsverfahren umfasst,
**dadurch gekennzeichnet, dass**
in derselben Prägeoberfläche (201) das Oberflächenrelief (202) so ausgebildet ist, dass bei dem Laminationsverfahren zeitgleich mit dem Einprägen der Mikrostrukturen (5) auch zusätzlich diffraktive Oberflächenstrukturen (7) in derselben Schichtoberfläche (4) der Kunststoffschicht (3) eingeprägt werden oder einprägbar sind, wobei ein Teil der Mikrostrukturen frei von diffraktiven Strukturen bliebt und/oder die Mikrostrukturen (5) nur in einem Teilbereich an ihrer Oberfläche mit den diffraktiven Oberflächenstrukturen (7) ausgebildet sind.

## Claims

1. Safety element (1) comprising
a device body (2) having a transparent plastic layer (3) on a layer surface (4) of which microstructures (5) are formed,
**characterised in that**
in the same layer surface (4) diffractive surface structures (7) are additionally formed, and the diffractive surface structures (7) are formed at least part-surface on the microstructures (5), wherein a part of the microstructures is free of diffractive structures and/or the microstructures (5) are formed in only a part region on their surface with the diffractive surface structures (7).

2. Safety element (1) according to claim 1, **characterised in that** the microstructures (5) comprise a lens array (104).

3. Safety element (1) according to any one of claims 1 or 2, **characterised in that** the diffractive surface structures (7) comprise an embossing hologram.

4. Method for the forming of a safety element according to claim 1, comprising the steps:
providing at least one transparent plastic layer (3) and
formation of microstructures (5) on the layer surface (4) of the at least one plastic layer (3),
**characterised in that**, on the same layer surface (4) of the at least one transparent plastic layer (3) on which the microstructures (5) are formed, diffractive surface structures (7) are formed, and the diffractive surface structures (7) are formed in such a way that the diffractive surface structures (7) are formed in whole or in part at least on one part of the surface of the microstructures (5), wherein a part of the microstructures remains free of diffractive structures and/or the microstructures (5) are formed only in a part region on their surface with the diffractive surface structures (7).

5. Method according to claim 4, **characterised in that** the microstructures and the diffractive surface structures (7) are simultaneously formed by means of embossing tools into the surface layer (4) of the at least one transparent plastic layer (3).

6. Method for verifying a safety element (1) according to claim 1, which comprises microstructures (5) and diffractive surface structures (7), comprising the steps:
verifying the microstructure by means of an optical detection process,
**characterised in that**
at the verification of the microstructures (5) it is examined whether, by means of the optical detection process, a diffractive optical effect is additionally detected, and a verification result is derived, which indicates the safety element (1) as positively verified, if the verification of the microstructures (5) provides a positive verification result, and, additionally, at least the diffractive effect is detected, and if a part of the microstructures does not show the diffractive effect and/or if the microstructures (5) show the diffractive effect only in a part region on their surface.

7. Lamination sheet (200) for the formation of a safety element (1) according to claim 1 in a layer surface (4) of a plastic layer (3), wherein the lamination sheet (200) comprises an embossing surface, which is provided as a contact surface with the plastic layer (3) during a lamination process, wherein the embossing surface (201) comprises a surface relief (202) for the embossing of microstructures (5) into a layer surface (4) of the plastic layer (3) during the lamination process,
**characterised in that**
in the same embossing surface (201) the surface relief (202) is formed in such a way that, during the lamination process, simultaneously with the embossing of the microstructures (5), diffractive surface structures (7) are additionally also embossed or can be embossed in the same layer surface (4) of the plastic layer (3), wherein part of the microstructures remains free of diffractive structures and/or the microstructures (5) are formed only in a part region on their surface with the diffractive surface structures (7).

## Revendications

1. Elément de sécurité (1) comprenant
un corps de dispositif (2) pourvu d'une couche en plastique (3) transparente, au niveau d'une surface de couche (4) de laquelle des microstructures (5) sont réalisées, **caractérisé en ce**
**que** des structures de surface (7) diffractives sont réalisées en supplément dans la même surface de couche (4), et en ce que les structures de surface (7) diffractives sont réalisées au moins sur une surface partielle sur les microstructures (5), sachant qu'une partie des microstructures est sans structure diffractive et/ou que les microstructures (5) sont réalisées seulement dans une zone partielle au niveau de leur surface avec les structures de surface (7) diffractives.

2. Elément de sécurité (1) selon la revendication 1, **caractérisé en ce que** les microstructures (5) comprennent un réseau de lentilles (104).

3. Elément de sécurité (1) selon l'une quelconque des revendications 1 ou 2, **caractérisé en ce que** les structures de surface (7) diffractives comprennent un hologramme estampé.

4. Procédé servant à réaliser un élément de sécurité selon la revendication 1, comprenant les étapes suivantes consistant à :
fournir au moins une couche en plastique (3) transparente et
réaliser des microstructures (5) au niveau de la surface de couche (4) de la couche en plastique (3) au moins au nombre de une,
**caractérisé en ce**
**que** des structures de surface (7) diffractives sont réalisées en supplément au niveau de la même surface de couche (4) de la couche en plastique (3) transparente au moins au nombre de une, au niveau de laquelle les microstructures (5) sont réalisées, et en ce que les structures de surface (7) diffractives sont réalisées de telle manière que les structures de surface (7) diffractives sont réalisées en totalité ou en partie au moins sur une partie de la surface des microstructures (5), sachant qu'une partie des microstructures reste sans structures diffractives et/ou que les microstructures (5) sont réalisées seulement dans une zone partielle au niveau de leur surface avec les structures de surface (7) diffractives.

5. Procédé selon la revendication 4, **caractérisé en ce que** les microstructures et les structures de surface (7) diffractives sont formées dans le même temps au moyen d'outils d'estampage dans la surface de couche (4) de la couche en plastique (3) transparente au moins au nombre de une.

6. Procédé servant à vérifier un élément de sécurité (1) selon la revendication 1, qui comprend des microstructures (5) et des structures de surface (7) diffractives, comprenant les étapes suivantes consistant à :
vérifier la microstructure au moyen d'un procédé de détection optique,
**caractérisé en ce**
**que** lors de la vérification des microstructures (5) on vérifie si un effet optique diffractif est détecté en supplément au moyen du procédé de détection optique et si un résultat de la vérification est déduit, lequel indique l'élément de sécurité (1) comme ayant été vérifié de manière positive lorsque la vérification des microstructures (5) fournit un résultat de vérification positif et qu'au moins l'effet diffractif est détecté en supplément et lorsqu'une partie des microstructures n'affiche pas l'effet diffractif et/ou lorsque les microstructures (5) affichent seulement dans une zone partielle, au niveau de leur surface, l'effet diffractif.

7. Tôle de stratification (200) servant à réaliser un élément de sécurité (1) selon la revendication 1 dans une surface de couche (4) d'une couche en plastique (3), sachant que la tôle de stratification (200) présente une surface estampée, qui est prévue en tant que surface de contact avec la couche en plastique (3) lors d'un procédé de stratification, sachant que la surface estampée (201) comprend un relief de surface (202) servant à estamper des microstructures (5) dans une surface de couche (4) de la couche en plastique (3) lors du procédé de stratification,
**caractérisée en ce**
**que** le relief de surface (202) est réalisé dans la même surface estampée (201) si bien que lors du procédé de stratification, des structures de surface (7) diffractives dans la même surface de couche (4) de la couche en plastique (3) sont estampées additionnellement ou peuvent être estampées additionnellement dans le même temps avec l'estampage des microstructures (5), sachant qu'une partie des microstructures reste sans structures diffractives et/ou que les microstructures (5) sont réalisées seulement dans une zone partielle au niveau de leur surface avec les structures de surface (7) diffractives.
